(19)

Europäisches
Patentamt
European
Patent Office
Office européen
des brevets

(11) **EP 3 499 384 A1**

(12) **EUROPEAN PATENT APPLICATION**

(43) Date of publication:
**19.06.2019 Bulletin 2019/25**

(51) Int Cl.:
**G06F 17/27** (2006.01)     **G06F 17/28** (2006.01)

(21) Application number: **17306801.6**

(22) Date of filing: **18.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Fortia Financial Solutions**
**75008 Paris (FR)**

(72) Inventors:
• **Mansar, Youness**
  **92250 La Garenne-Colombes (FR)**
• **Ferradans, Sira**
  **75011 Paris (FR)**
• **Staiano, Jacopo**
  **75011 Paris (FR)**

(74) Representative: **Cabinet Beau de Loménie**
**158, rue de l'Université**
**75340 Paris Cedex 07 (FR)**

(54) **WORD AND SENTENCE EMBEDDINGS FOR SENTENCE CLASSIFICATION**

(57)     This method is used for processing an electronic document comprising text. It comprises :
- a step (E5) of splitting the text into at least one sentence, and for each said sentence :
- a step (E15) of associating each word (i) of said sentence with a word-vector (ui) ;
- a step (E20) of representing said sentence by a sentence-vector (s), wherein obtaining said sentence-vector comprises computing a weighted average of the all said word-vectors (ui) of said sentence ;
- if it is determined (E30) that said sentence-vector is associated with a tag (tk) in a data set (DB2) of sentence-vectors (s1, sN) associated with tags (tl, tN), obtaining (E35) this tag (tk) ;
- otherwise, obtaining (E40) a tag (ts) for said sentence-vector (s) using a classification algorithm ;
- processing (E50) said sentence if the tag obtained for said sentence is associated with a predetermined label.

FIG.2

**EP 3 499 384 A1**

**Description**

Field of the invention

This invention aims at improving the performance of state-of-the art methods of processing electronic text documents for identifying therein or extracting therefrom sentences that correspond to a given criteria.

Such methods allow a user to identify systematically and rapidly sentences that meet a predetermined rule. They may be used in any field, and are of particular importance when such identification may be performed very rapidly and/or in a very long text. The invention may be applied for parsing a text in a situation of emergency, for identifying regulatory rules defined in an industrial prospectus or any kind of compliance text.

Prior art

A sentence classification method is proposed by Yoon Kim in ref [1]. This method merely consists in representing a sentence as a concatenation of word embeddings, where each word is represented as a column in the matrix. The matrix is input to a Convolutional Neural Network (CNN) classifier.

It is recalled that a CNN is a neural network where each layer has a set of convolutional filters. The values of these filters are optimized during a training phase. This training phase consists in obtaining the values of the filters that give best accuracy for the classification task on a predefined data set. This classifier algorithm takes as input a vector or matrix and provides as output a binary tag whose value represents whether a sentence is considered to belong to a predefined class or not.

However, the accuracy of Yoon Kim's method is not enough for industrial applications.

Summary of the invention

According to a first aspect, the invention relates to a method of processing an electronic document comprising text. This method comprises a step of splitting the text into sentences, and for each sentence :

- a step of associating each word of the sentence with a word-vector;
- a step of representing the sentence by a sentence-vector, wherein obtaining the sentence-vector comprises computing a weighted average of all the word-vectors of the sentence;
- if it is determined that the sentence-vector is associated with a tag in a data set of sentence-vectors associated with tags, obtaining this tag ;
- otherwise obtaining a tag for the sentence-vector using a classification algorithm ; and
- processing the sentence if the tag obtained for this sentence is associated with a predetermined label.

Correlatively, the invention relates to a device for processing an electronic document comprising text. This device comprises :

- a module for splitting the text into sentences ;
- a module for associating each word of the sentence with a word-vector;
- a module for representing the sentence by a sentence-vector, wherein obtaining the sentence-vector comprises computing a weighted average of all the word-vectors of the sentence;
- a module for determining if the sentence-vector is associated with a tag in a data set of sentence-vectors associated with tags and for obtaining this tag ;
- a module for obtaining a tag for the sentence-vector using a classification algorithm ; and
- a module for processing the sentence if the tag obtained for this sentence is associated with a predetermined label.

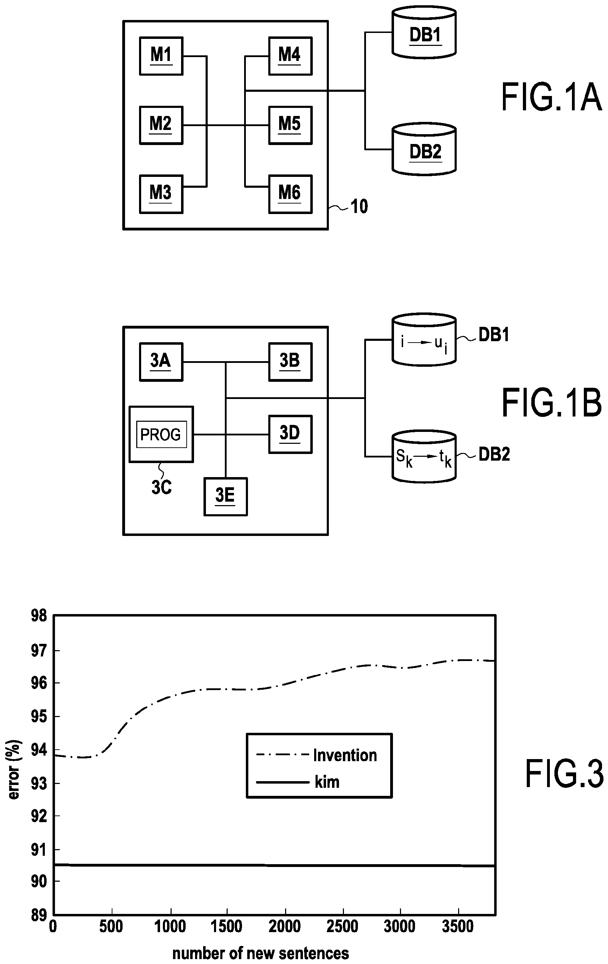

As shown later with reference to Fig. 3, the invention the method and the device of the invention improve the accuracy for sentence classification, in comparison with Yoon Kim's method presented in ref. [1].

This result is notably achieved by the combination of the step of representing the sentence by a sentence-vector and the step of associating the sentence-vector with a tag present in the data set if applicable.

The step of associating a word with a word-vector is known by the man skilled in the art of machine learning under the terminology of «word embeddings». It consists in particular in creating a dictionary of words, and for each of these words, associating a unique vector.

In one embodiment, the step of associating a word to a word-vector uses a weighted least squares model that trains on global word-word co-occurrence counts.

Such a method is known from the man skilled in the art of word representation for classification presented on ref. [3].

In one embodiment, the step of associating a word to a word-vector uses a two layer neural network trained on the task of predicting the word given the context.

Such a method is known from the man skilled in the art of word representation for classification presented on ref. [2].

These two methods advantageously encode semantic meaning and locate close together word-vectors corresponding to similar concepts.

In one embodiment, the method further comprises a preprocessing step, this preprocesing step comprising :

- replacing capital letters by lower case letters in each sentence ; and
- deleting predetermined characters in each sentence.

In one embodiment, the step of associating a word-vector with a word comprises :

- obtaining the word-vector associated with said word in a database, if the word is already associated with a word-vector in the database ; or
- generating the word-vector with random values if the word is not already associated with a word-vector in the database.

In one embodiment, the weight given to a word-vector is all the more important as the probability of finding the word associated to the word-vector in the text is low.

In one embodiment, the weight $w_i$ given to a word-vector $u_i$ is :

$$w_i = a/( \, a + p(u_i) \, )$$

where a is a number, and $p(u_i)$ is the probability of finding the word i associated to the word-vector $u_i$ in the text.

In another embodiment, the above-mentioned weight may be the term frequency-inverse document frequency «tf-idf» disclosed at https://fr.wikipedia.org/wiki/TF-IDF, this term being calcultated as the product of the frequency of the word and a measure of how much information the word provides.

In one embodiment, the step of determining whether a sentence-vector is associated with a tag in the data set of sentence-vectors associated with tags is done comprises a step of searching said sentence-vectors in the data set, wherein this searching step implements:

- an exhaustive search; or
- a multidimensional binary search tree that organizes the space of sentence-vectors by implicitly splitting it using half-hyperplanes;
- or a branch and bound algorithm for finding k-neareast neighbours.

Examples of (i) multidimensional binary search trees and of (ii) branch and bound algorithm are respectively detailed in ref. [4] and [5].

In one embodiment, the sentence-vector is normalized. This post-processing step makes the sentence representation more discriminative.

In one embodiment, the step of normalizing the sentence-vector comprises (i) projecting the sentence-vector on a precomputed sentence-vector C and (ii) substracting the result of this projection from the sentence-vector.

In one embodiment, the precomputed sentence-vector C is computed as the first component of a Principal Component Analysis.

For more information on the method of Principal Component Analysis, the man skilled in the art may refer to Ref. [6].

In one embodiment, if it is determined that the sentence-vector is not associated with a tag in the data set, the step of obtaining the sentence-vector using a classification algorithm comprises:

- obtaining a matrix where each column with index 'i' contains the word-vector associated with the i-th word in the sentence ;
- determining a tag for the sentence using this matrix and a pre-trained classification method ; and
- storing this tag in association with the sentence-vector in the data set.

In one embodiment, the pre-trained classification method is chosen among :

- a sentence classification method comprising a step of representing said sentence as a concatenation of word embeddings, where each word is represented as a column in the matrix, and a step if inputting the matrix into a Convolutional Neural Network classifier, for example the sentence classification method proposed by Yoon Kim in ref [1]; or
- a supervised classification method.

The SVM method and the CNN method disclosed in Ref [7] and [8], respectively, are examples of such supervised classification method.

In one embodiment, the method comprises:

- a step of presenting to the user the sentence and the tag obtained for the sentence-vector representing this sentence.; and
- a step enabling the user to correct the tag in the data set.

Thus, the invention allows the user to react in a real-time for correcting a tag if he considers that the classification of the sentence is not correct. Therefore:

- the method can improve as it processes more sentences ;
- the method can improve in real time the response.

In a particular implementation, the various processes of the document processing method are determined by program instructions for computers or microprocessors.

Consequently, some embodiments also provide a computer or microprocessor program on a data medium, the program being suitable for being performed in a computer, the program including instructions adapted to perform the processes of the document processing method as described above.

Some embodiments also provide a computer or microprocessor program on a data medium, the program being suitable for being performed in a connected object or more generally in a computer, the program including instructions for performing processes of a document processing method as described above.

This program may make use of any programming language, and may be in the form of source code, object code, or code intermediate between source code and object code, such as in a partially complied form, or in any other desirable form.

Some embodiments also provide a computer readable data medium including computer program instructions as mentioned above.

The data medium may be any entity or device capable of storing the program. For example, the medium may comprise storage components, such as a read only memory (ROM), e.g. a compact disk (CD) ROM or a microelectronic circuit ROM, or indeed magnetic recording components, e.g. a floppy disk or a hard disk.

Furthermore, the data medium may be a transmissible medium such as an electrical or optical signal suitable for being conveyed via an electrical or optical cable, by radio, or by other approaches. In some embodiments, the program may in particular be downloaded from an Internet type network.

Brief description of the drawings

- FIG. 1A and 1B represent respectively a device for processing an electronic document according to one embodiment of the invention and the architecture thereof;

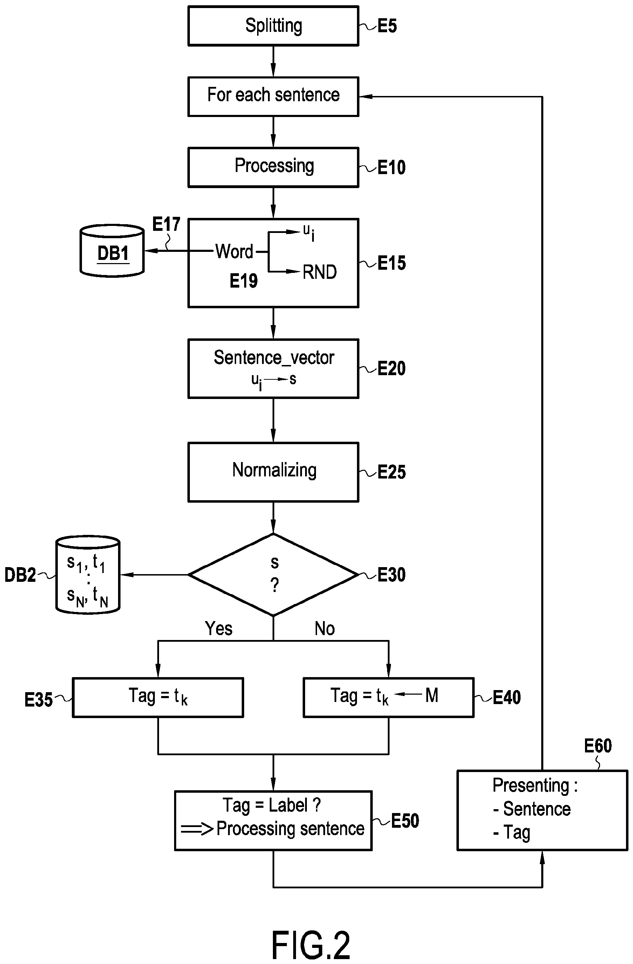

- FIG. 2 is a flowchart representing the main steps of a method of processing an electronic document according to a particular embodiment of the invention ;
- FIG. 3 illustrates the performance of the method of the invention ;

Detailed description of an embodiment of the invention

FIG. 1A represents a device 10 for processing an electronic document according to one embodiment of the invention.

This device is configured to access :

- a database DB1 comprising words, each word i being associated with a word-vector $u_i$ in the database DB1 ;
- a data set DB2 comprising sentence-vectors $s_1$, $s_2$, ..., $s_N$ associated with tags $t_1$, $t_2$, ..., $t_N$.

In the presently-described embodiment, the device 10 has the hardware architecture of a computer, as shown diagrammatically in FIG. 1B. It comprises in particular: a processor 3A; a random access memory (RAM) 3B; a read only memory (ROM) 3C; and a rewritable non-volatile memory 3D; all of which are themselves known. Furthermore, the terminal 3 is provided with input/output components 3E enabling it to interact with a user U of the terminal, such as for example a screen, a keypad, all of which are known.

The ROM 3C of the terminal constitutes a data medium as described herein that is readable by the processor 3A and that stores a computer program PROG including instructions for executing processes of a transfer method as described herein. In equivalent manner, the computer program defines functional modules that are constituted in full or in part by software, relying on the above-mentioned hardware components of the device 10, namely and more precisely:

- a module M1 for splitting a text into sentences ;
- a module M2 for associating each word of the sentence with a word-vector;
- a module M3 for representing the sentence by a sentence-vector, the sentence-vector being obtained by computing a weighted average of all the word-vectors of the sentence;
- a module M4 for determining if the sentence-vector is associated with a tag in a data set of sentence-vectors associated with tags and for obtaining this tag ;
- a module M5 for obtaining a tag for the sentence-vector using a classification algorithm ; and
- a module M6 for processing the sentence if the tag obtained for this sentence is associated with a predetermined label.

FIG. 1 is a flowchart representing the main steps E5-E60 of a method that can be executed by the device 10 in a particular embodiment of the invention.

The method comprises a step E5 of splitting the text into sentences.

In this embodiment, this splitting step E5 is followed by a loop of steps E10 to E60 for processing each sentence, hereafter referred to a « current sentence ».

In this embodiment, the loop comprises a preprocessing step E10, for replacing capital letters by lower case letters and deleting predetermined characters (punctuation signs, URLs, percentages) in the current sentence. An example of algorithm for implementing this preprocessing step is given in Appendix 1

The preprocessing step E10 is followed by a step E15 of associating each word i of the current sentence with a word-vector $u_i$. Such a step may also be qualified as a word embedding step.

This word embedding step may be implemented using :

- uses a weighted least squares model that trains on global word-word co-occurrence counts; or
- a two layer neural network trained on the task of predicting the word given the context.

In this particular embodiment, this step E15 comprises a step E17 of determining whether word i is already associated with a word-vector $u_i$ in the database DB1. In such a case this word vector $u_i$ is obtained.

Otherwise, the word vector $u_i$ associated to word i is generated with random values during a step E19. Word i and the generated word vector $u_i$ are stored in the database DB1 so that in further occurrences this word will be associated to the same word-vector.

The word embedding step E15 is followed by a step E20 of representing the current sentence by a sentence-vector s computed as a weighted average of the word-vectors $u_i$ of the current sentence :

$$S = W_1 \, U_1 + W_2 \, U_2 + ...$$

The sentence vector s and the word vectors $u_i$ have the same dimensions.

In this embodiment, the weight $w_i$ given to a word-vector $u_i$ is all the more important as the probability of finding the word i associated to this word-vector $u_i$ in the text is low. For example, the weight $w_i$ may be inverse to the frequency of appearance of the word i in the text.

In this embodiment, the weight $w_i$ given to a word-vector $u_i$ is :

$$w_i = a/(\, a + p(u_i)\, )$$

where a is a number, and $p(u_i)$ is the probability of finding the word i in the text.

In this embodiment, the step E20 of calculating the sentence-vector s is followed by a step E25 of normalizing said sentence vector s.

In a particular embodiment, this normalizing step E25 comprises:

- a step of projecting the sentence-vector s on a precomputed sentence-vector C ;
- a step of substracting the result of said projection from the sentence-vector s.
- a step of dividing the vector by its length.

For example :

$$S_{temp} = S$$

$$s' = S_{temp} - < S_{temp}, C > C$$

$$s = s' / |s'|$$

where :

$s_{temp}$ is a temporary variable used to store the value of the sentence-vector before normalization ;
s is the sentence-vector after normalization ;
| | operation that gives the norm of the vector;
<,> is the dot product
C is the first component of the Principal Component Analysis (PCA) of a predefined set of sentences vectors.

The PCA method consists in fitting an ellipsoid to the training set. The axis of this ellipsoid are the principal components. Vector 'C' corresponds to the biggest principal component.

In this embodiment, the normalizing step E25 is followed by a step E30 of determining if the sentence-vector s (normalized or not) is associated with a tag in a data set of sentence-vectors $s_1$, $s_2$, ..., $s_N$ associated with tags $t_1$, $t_2$, ..., $t_N$ and memorized in the data set DB2.

In this embodiment, this step E30 consists in determining the euclidian distance between the sentence-vector s and the sentence-vectors $s_1$, ..., $s_N$. If the euclidian distance between s and a sentence-vector $s_k$ is less than a predetermined threshold, it is considered that the sentence vector s is same or similar to the sentence-vector $s_k$ and the tag $t_k$ associated with the sentence-vector $s_k$ in the data set DB2 is obtained during a step E35.

Otherwise, if it is determined at step E30 that the sentence-vector s is not in the above-mentioned data set, a tag $t_s$ is obtained for the sentence-vector s using a classification algorithm during a step E40.

The determining step E30 requires search all the sentence-vectors $s_1$, ..., $s_N$ in the data set DB2.

This search may be performed using :

- an exhaustive search ; or
- a multidimensional binary search trees used for associative searching, for example the kd-tree algorithm disclosed in [4] ; or
- a branch and bound algorithm, for example the ball-tree algorithm disclosed in [5].

These two latter algorithms are more efficient than the exhaustive search which is complex and exponential by nature. They both organize the search space so that some comparisons can be discarded without actually computing the distance between the sentence-vectors.

In this embodiment, the classification algorithm used at step E40, if it is determined at step E30 that the sentence-vector s is not in the above-mentioned data set, the step (E40) for obtaining the tag $t_s$ for the sentence-vector comprises :

- obtaining a matrix M where each column with index 'i' contains the word-vector associated with the i-th word in the current sentence ;
- determining the tag $t_s$ for the sentence-vector s using said matrix and a pretrained classification method ;
- storing the tag $t_s$ in association with the sentence-vector s in the data set DB2.

The pretrained classification method may be :

- the sentence classification method proposed by Yoon Kim in ref [1] ; or
- any other supervised classification method, for example the SVM method or the CNN method.

Once a tag $t_s$ has been obtained for the sentence-vector s at step E35 or E40, the text processing method executes a step E50 of processing the sentence if the tag obtained for the sentence is associated with a predetermined label.

This step may consist in highlighting the sentence in the text if the sentence matches a predetermined rule.

In this embodiment, the method also comprises a step E60 of presenting to the user:

- the current sentence ; and
- the tag $t_s$ identified for the sentence-vector representing this sentence.

This step E60 allows the user to correct, in the data set DB2, the tag associated with the sentence-vector s.

Figure 3 illustrates the performance of the method of the invention (dotted lines) in comparason with the method of Yoon Kim (plain lines): In order to show the improvement of the invention, the inventor have gathered a testing data base of 3830 sentences with their associated tags. These sentence were processed with the method of the invention and they obtained an accuracy in the tag prediction of 93.8% while using Yoon Kim's method they obtained an accuracy of 90.51%.

Figure 3 also illustrates how the accuracy changes as the method processes more sentences. The starting accuracy, as stated before is 93.8%, and after processing the testing data set, it reaches 96.71% accuracy, being an improvement of 46% with respect to the original method and 65% with respect to Kim's method.

References

[1] Yoon Kim.'Convolutional Neural Networks for Sentence Classification'. arXiv preprint arXiv:1408.5882, 2014.

[2] T. Mikolov, K. Chen, G. Corrado, and J. Dean, "Efficient estimation of word representations in vector space," arXiv preprint arXiv:1301.3781, 2013.

[3] J. Pennington, R. Socher, and C. D. Manning, "GloVe: Global vectors for word representation.," in Proceedings of EMNLP 2014, vol. 14, pp. 1532-43, 2014.

[4] Bentley, J. L. (1975). Multidimensional binary search trees used for associative searching. Communications of the ACM, 18(9), 509-517.

[5] K. Fukunaga and P.M. Narendra. A Branch and Bound Algorithm for Computing K-Nearest Neighbors. IEEE Trans. Computers, C-24(7):750-753, 1975.

[6] G. Strang. Introduction to Linear Algebra, Chp 7.3 Principal Component Analysis. 5th Edition, MIT Press, May 2016

[7] Friedman, J., Hastie, T., & Tibshirani, R. The elements of statistical learning (section 12.2 The Support Vector Classifier, pp. 417). New York: Springer series in statistics. Second edition, 2008, section 4 Linear Methods for Classification, section 11 Neural Networks.

[8]Goodfellow, Ian, Yoshua Bengio, and Aaron Courville. Deep learning. Chp 9. MIT press, 2016.

ANNEX 1

**Input** : Sentence S : concatenation of word that may or may not have punctuation signs, capital letters, etc.
**Output:** Sentence T : concatenation of words without punctuation

```
S1= Substitute_urls(S,'_URLS_')
S2= Substitute_percentage(S1,'_PERC_')
V=Split_words(S2)
foreach v in V do
    if v not punctuation then
        add_to_list(T, lowercase(v))
    end
end
```

**Claims**

**1.** A method of processing an electronic document comprising text, said method comprising a step (E5) of splitting the text into at least one sentence, and for each said sentence :

- a step (E15) of associating each word (i) of said sentence with a word-vector ($u_i$) ;
- a step (E20) of representing said sentence by a sentence-vector (s), wherein obtaining said sentence-vector comprises computing a weighted average of the all said word-vectors ($u_i$) of said sentence;
- if it is determined (E30) that said sentence-vector is associated with a tag ($t_k$) in a data set (DB2) of sentence-vectors ($s_1$, $s_N$) associated with tags ($t_1$, $t_N$), obtaining (E35) this tag ($t_k$);
- otherwise, obtaining (E40) a tag ($t_s$) for said sentence-vector (s) using a classification algorithm;
- processing (E50) said sentence if the tag obtained for said sentence is associated with a predetermined label.

2. A method according to Claim 1 wherein the step (E15) of associating a word-vector with a word comprises :

- obtaining (E17) the word-vector associated with said word in a database (DB1), if said word is already associated with a word-vector in said database ; or
- generating (E19) said word-vector with random values if said word is not already associated with a word-vector in said database.

3. A method according to Claim 1 or 2, wherein the weight given to a word-vector is all the more important as the probability of finding the word associated to said word-vector in said text is low.

4. A method according to claim 3, wherein the weight ($w_i$) given to a word-vector ($u_i$) is:

$$w_i = a/( a+ p(u_i) )$$

where a is a number, and $p(u_i)$ is the probability of finding the word (i) associated to said word-vector in said text.

5. A method according to any one of Claims 1 to 4 wherein said step of associating a word to a word-vector uses :

- a weighted least squares model that trains on global word-word co-occurrence counts ; or
- a two layer neural network trained on the task of predicting the word given the context

6. A method according to any one of Claims 1 to 5 wherein said step (E30) of determining whether a sentence-vector is associated with a tag in said data set (DB2) comprises a step of searching said sentence-vectors in the data set, wherein this searching step implements :

- an exhaustive search ; or
- a multidimensional binary search tree that organizes the space of sentence-vectors by implicitly splitting it using half-hyperplanes; or
- a branch and bound algorithm for finding k-nearest neighbours.

7. A method according to any one of Claims 1 to 6, **characterized in that** it further comprises a preprocessing step (E10), said preprocessing step comprising :

- replacing capital letters by lower case letters in each said sentence ; and
- deleting predetermined characters in each said sentence.

8. A method according to any one of Claims 1 to 7, comprising a step (E25) of normalizing said sentence-vector (s).

9. A method according to Claim 8, wherein said normalizing step (E25) comprises (E27) projecting said sentence-vector (s) on a precomputed sentence-vector (C) and subtracting the result of said projection from said sentence-vector (s).

10. A method according to Claim 8 or 9, in which said precomputed sentence-vector (C) is computed as the first component of a Principal Component Analysis.

11. A method according to any one of Claims 1 to 10 wherein, if it is determined (E30) that said sentence-vector is not associated with a tag in said data set, said step of obtaining said sentence-vector using a classification algorithm comprises :

- obtaining a matrix where each column with index 'i' contains the word-vector associated with the i-th word in said sentence ;
- determining a tag for said sentence using said matrix and a pre-trained classification method ;
- storing said tag in association with said sentence-vector (s) in said data set.

**12.** A method according to Claim 11, wherein said pre-trained classification method is chosen among :

- a sentence classification method comprising a step of representing said sentence as a concatenation of word embeddings, where each word is represented as a column in the matrix, and a step if inputting the matrix into a Convolutional Neural Network classifier; or
- a supervised classification method

**13.** A method according to any one of Claims 1 to 12 comprising a step E60 of presenting to the user :

- the sentence ; and
- the tag ($t_s$) obtained (E35, E40) for said sentence-vector;

and a step enabling the user to correct the tag ($t_s$) associated with said sentence-vector (s) in said data set (DB2).

**14.** A device for processing an electronic document comprising :

- a module (M1) for splitting the text into sentences ;
- a module (M2) for associating each word of the sentence with a word-vector;
- a module (M3) for representing the sentence by a sentence-vector, wherein obtaining the sentence-vector comprises computing a weighted average of all the word-vectors of the sentence;
- a module (M4) for determining if the sentence-vector is associated with a tag in a data set of sentence-vectors associated with tags and for obtaining this tag ;
- a module (M5) for obtaining a tag for the sentence-vector using a classification algorithm ; and
- a module (M6) for processing the sentence if the tag obtained for this sentence is associated with a predetermined label.

FIG.1A

FIG.1B

FIG.3

FIG.2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YOUNESS MANSAR ET AL: "Fortia-FBK at SemEval-2017 Task 5: Bullish or Bearish? Inferring Sentiment towards Brands from Financial News Headlines", ARXIV.ORG, CORNELL UNIVERSITY LIBRARY, 201 OLIN LIBRARY CORNELL UNIVERSITY ITHACA, NY 14853, 4 April 2017 (2017-04-04), XP080760585, * Sections 1-4 * | 1-14 | INV. G06F17/27 G06F17/28 |
| X | YOON KIM: "Convolutional Neural Networks for Sentence Classification", PROCEEDINGS OF THE 2014 CONFERENCE ON EMPIRICAL METHODS IN NATURAL LANGUAGE PROCESSING (EMNLP), 25 October 2014 (2014-10-25), pages 1746-1751, XP055274108, Stroudsburg, PA, USA DOI: 10.3115/v1/D14-1181 * the whole document * | 1,2,5, 11,12,14 | |
| X | Kim Yoon: "Instantly share code, notes, and snippets. Convolutional Neural Network For Sentence Classification Introduction", , 2016, XP055483311, Retrieved from the Internet: URL:https://gist.github.com/shagunsodhani/9ae6d2364c278c97b1b2f4ec53255c56 [retrieved on 2018-06-12] * the whole document * | 1,14 | **TECHNICAL FIELDS SEARCHED (IPC)** G06F |
| X | US 2017/308790 A1 (NOGUEIRA DOS SANTOS CICERO [US] ET AL) 26 October 2017 (2017-10-26) * paragraphs [0024] - [0046]; figures 2-4 * | 1-14 | |

-/--

The present search report has been drawn up for all claims

| Place of search | Date of completion of the search | Examiner |
|---|---|---|
| Berlin | 14 June 2018 | Alt, Susanne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 17 30 6801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 291 795 A (UNIV SOUTH CHINA TECH) 24 October 2017 (2017-10-24) * abstract * ----- | 1,14 | |
| A | Jacopo Staiano ET AL: "DepecheMood: a Lexicon for Emotion Analysis from Crowd-Annotated News", Proceedings of the 52nd Annual Meeting of the Association for Computational Linguistics (Short Papers), 7 May 2014 (2014-05-07), pages 427-433, XP055483290, Retrieved from the Internet: URL:http://www.aclweb.org/anthology/P14-2070 [retrieved on 2018-06-11] * Section 3-5 * ----- | 1-14 | |

TECHNICAL FIELDS SEARCHED (IPC)

The present search report has been drawn up for all claims

| Place of search | Date of completion of the search | Examiner |
|---|---|---|
| Berlin | 14 June 2018 | Alt, Susanne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**EP 3 499 384 A1**

## ANNEX TO THE EUROPEAN SEARCH REPORT
## ON EUROPEAN PATENT APPLICATION NO.

EP 17 30 6801

14-06-2018

| Patent document cited in search report | Publication date | Patent family member(s) | Publication date |
|---|---|---|---|
| US 2017308790 A1 | 26-10-2017 | NONE | |
| CN 107291795 A | 24-10-2017 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YOON KIM.** Convolutional Neural Networks for Sentence Classification. *arXiv preprint arXiv:1408.5882,* 2014
- **T. MIKOLOV ; K. CHEN ; G. CORRADO ; J. DEAN.** Efficient estimation of word representations in vector space. *arXiv preprint arXiv:1301.3781,* 2013
- **J. PENNINGTON ; R. SOCHER ; C. D. MANNING.** GloVe: Global vectors for word representation. *Proceedings of EMNLP,* 2014, vol. 14, 1532-43
- **BENTLEY, J. L.** Multidimensional binary search trees used for associative searching. *Communications of the ACM,* 1975, vol. 18 (9), 509-517

- **K. FUKUNAGA ; P.M. NARENDRA.** A Branch and Bound Algorithm for Computing K-Nearest Neighbors. *IEEE Trans. Computers,* 1975, vol. C-24 (7), 750-753
- Introduction to Linear Algebra. **G. STRANG.** Principal Component Analysis. MIT Press, May 2016
- The elements of statistical learning. **FRIEDMAN, J. ; HASTIE, T. ; TIBSHIRANI, R.** The Support Vector Classifier. Springer, 2008, 417
- **GOODFELLOW, IAN ; YOSHUA BENGIO ; AARON COURVILLE.** Deep learning. MIT press, 2016